# EUROPEAN PATENT SPECIFICATION

(11) **EP 1 635 652 B1**
(45) Date of publication and mention of the grant of the patent: **25.07.2007**
(21) Application number: 04776873.4
(22) Date of filing: 18.06.2004
(51) Int. Cl.: A23K 1/18, A23K 1/175

(54) **METHODS FOR PREVENTING HYPERTHYROIDISM IN A CAT AND COMPOSITION COMPRISING LIMITED SELENIUM AN IODINE**
VERFAHREN ZUR VORBEUGUNG VON SCHILDDRÜSENÜBERFUNKTION BEI DER KATZE SOWIE ZUSAMMENSETZUNGEN MIT EINGESCHRÄNKTEM SELEN- UND JODGEHALT
PROCEDES PERMETTANT D'EMPECHER L'HYPERTHYROIDIE CHEZ LE CHAT ET COMPOSITION A TENEUR LIMITEE EN SELENIUM ET EN IODE

(30) Priority: 20.06.2003 US 600497
(43) Date of publication of application: 22.03.2006
(73) Proprietor: Hill's Pet Nutrition Inc., Topeka, KS 66603 (US)
(72) Inventor: WEDEKIND, Karen, Meriden, KS 66512 (US); KIRK, Claudia, Louisville, TN 37777-3424 (US)
(74) Representative: Winckels, Johannes Hubertus F.
(86) International application number: PCT/US2004/019853
(87) International publication number: WO 2004/112499

(56) References cited:
- ANONYMOUS: "ROYAL CANIN Veterinary Diet" INTERNET ARTICLE, [Online] XP002301316 Retrieved from the Internet: <URL:http://www.walthamusa.com/Learning%20 Center/pdf/LP21.pdf> [retrieved on 2004-10-15]
- WEDEKIND K J ET AL: "Bioavailability of selenium in pet food ingredients" FASEB JOURNAL, vol. 11, no. 3, 1997, page A360 XP009038357 & ANNUAL MEETING OF THE PROFESSIONAL RESEARCH SCIENTISTS ON EXPERIMENTAL BIOLOGY 97; NEW ORLEANS, LOUISIANA, USA; APRIL 6-9, 1997 ISSN: 0892-6638
- MUMMA R O ET AL: "TOXIC AND PROTECTIVE CONSTITUENTS IN PET FOODS" AMERICAN JOURNAL OF VETERINARY RESEARCH, vol. 47, no. 7, 1986, pages 1633-1637, XP009038331 ISSN: 0002-9645
- WEDEKIND KAREN J ET AL: "Defining the safe lower and upper limit for selenium (Se) in adult dogs" FASEB JOURNAL, vol. 16, no. 5, 22 March 2002 (2002-03-22), pages A992-A993, XP009038337 & ANNUAL MEETING OF PROFESSIONAL RESEARCH SCIENTISTS ON EXPERIMENTAL BIOLOGY; NEW ORLEANS, LOUISIANA, USA; APRIL 20-24, 2002 ISSN: 0892-6638
- FOSTER DARREN J ET AL: "Selenium status of cats in four regions of the world and comparison with reported incidence of hyperthyroidism in cats in those regions" AMERICAN JOURNAL OF VETERINARY RESEARCH, vol. 62, no. 6, June 2001 (2001-06), pages 934-937, XP009038095 ISSN: 0002-9645
- ANONYMOUS: "Sodium selenate" LIFE LINK, [Online] 2001, XP002301317 Retrieved from the Internet: <URL:http://www.lifelinknet.com/siteResour ces/ProductPages/Sodium-Selenate.asp> [retrieved on 2004-10-13]
- LABUC R H ET AL: "FELINE HYPERTHYROIDISM A SHORT REVIEW" AUSTRALIAN VETERINARY PRACTITIONER, vol. 16, no. 3, 1986, pages 139-142, XP001203462 ISSN: 0310-138X
- WEDEKIND K J ET AL: "Determination of the selenium requirement in kittens." JOURNAL OF ANIMAL PHYSIOLOGY AND ANIMAL NUTRITION, vol. 87, no. 9-10, October 2003 (2003-10), pages 315-323, XP001203460 ISSN: 0931-2439

## Description

### FIELD

This application relates generally to dietary maintenance of the healthy feline and, more particularly, to methods for reducing risk of developing hyperthyroidism in a feline by restricting the amount of selenium intake in the feline.

### BACKGROUND

Hyperthyroidism is the most common endocrine disease of older cats. The disease is accompanied by hyperactivity, weight loss and a palpable goiter. Although treatments are available, including anti-thyroid drugs, surgery or the use of radioactive iodine to destroy the glandular tissue, each of these interventions has limitations and side effects. Thus, an unfilled need exists for methods and compositions for reducing the risk of developing abnormal thyroid function and hyperthyroidism in cats.

### SUMMARY

Accordingly, the inventors herein have succeeded in discovering that restricting the dietary intake of selenium in cats reduces the risk of the cats developing hyperthyroidism.

Thus, in various embodiments, the present invention can involve a method for reducing risk of developing hyperthyroidism in a feline. The method can comprise restricting the amount of selenium in the feline diet to an amount equal to or less than 1.3 mg/kg, equal to or less than 1.0, equal to or less than 0.8 mg/kg, or equal to or less than 0.65 mg/kg on a dry matter basis. The methods can further comprise restricting the amount of iodine in the feline diet to not more than 1.0 mg/kg on a dry matter basis.

In various embodiments, the compositions and methods based upon the compositions can involve dietary compositions comprising from 10% to 40% or from 20% to 40% protein on a dry matter basis. The protein in such compositions can contain selenium at a concentration equal or less than 1.0 mg/kg or equal to or less than 0.5 mg/kg crude protein.

In various embodiments, the composition and methods based upon the compositions can involve dietary compositions comprising from 10% to 50% protein, from 10 to 30% fat and from 5% to 55% carbohydrate.

The protein in the compositions and methods based upon the compositions can be vegetable protein or animal protein or combinations thereof. The vegetable protein can be potato concentrate, soy concentrate, soy protein isolate, soybean meal, rice isolate, corn gluten meal or combinations thereof and the animal protein can be from chicken backs, beef tongue, pork lung, beef lung, mechanically deboned turkey, poultry by-product meal, egg and combinations thereof.

### DETAILED DESCRIPTION

The present invention, thus, involves diets containing a restricted amount of selenium and methods of feeding such diets to felines to reduce the risk of developing hyperthyroidism.

Hyperthyroidism in cats can be diagnosed and assessed as to severity according to methods and disease characteristics well known in the art. (see, for example, Peterson et al., in The cat: diseases and clinical management, R. G. Sherding, Ed., New York, Churchill Livingstone, 2nd Edition, pp. 1416-1452, 1994; Gerber et al. Vet Clin North Am Small Anim Pract 24:541-65, 1994).

The term "iodine," as used herein, refers to the iodine atom without reference to its molecular form. Thus, the term iodine includes without restriction the atom iodine, which can be present in one or more chemical forms, such as iodide, iodate, periodate, erythrosine, and the like.

The term "selenium," as used herein, refers to the selenium atom without reference to its molecular form. Thus, the term selenium includes without restriction the atom selenium which can be present in one or more chemical forms, such as selenite, selenate, selenomethionine, and the like.

The abbreviation "T4," as used herein, refers to the iodine-containing amino acid thyroxine, 3,5,3',5'-tetraiodothyronine. The term "free T4" refers to T4 that is not bound to a carrier protein such as thyroid-binding globulin, albumin, prealbumin, and the like.

The abbreviation "T3," as used herein, refers to the iodine-containing amino acid 3,5,3'-triiodothyronine. The term "free T3" refers to T3 that is not bound to a carrier protein such as thyroid-binding globulin, albumin, prealbumin, and the like.

The abbreviation "GPX," as used herein, refers to the selenium-dependent enzyme glutathione peroxidase.

Concentration of iodine or other mineral elements in foods and feedstuffs can be expressed alternatively on a molar basis (micromoles per kilogram) or on a weight basis (milligrams per kilogram, identical to parts per million, "PPM"). Iodine has a molecular weight of 126.9. Thus a molar concentration of 2.76 micromoles of iodine per kilogram is equal to a weight concentration of 0.35 PPM. Selenium has a molecular weight of 78.96. Thus a molar concentration of 1.25 micromole of selenium per kilogram is equal to a weight concentration of 0.1 mg/kg.

In various embodiments of the present invention, selenium can be present in the diet composition at a maximum concentration equal to or less than 1.3 mg/kg of diet, a maximum concentration equal to or less than 1.0 mg/kg of diet, a maximum concentration equal to or less than 0.9 mg/kg of diet, a maximum concentration equal to or less than 0.8 mg/kg of diet, a maximum concentration equal to or less than 0.65 or 0.60 mg/kg of diet, a maximum concentration equal to or less than 0.4 mg/kg, a maximum concentration equal to or less than 0.3 mg/kg of diet or a maximum concentration equal to or less than 0.2 mg/kg of diet on a dry matter basis.

Iodine can additionally be present in the diet compositions. The amount of iodine present should be at a level that does not cause adverse thyroid function. It is believed that such maximum level that does not cause adverse thyroid function in cats is 2.5 or 2.0 mg/kg diet. Thus, iodine can be present in the diet compositions of the present invention at a maximum concentration equal to or less than 2.5 mg/kg of diet, a maximum concentration equal to or less than 2.0 mg/kg of diet, a maximum concentration equal to or less than 1.0 mg/kg of diet, a maximum concentration equal to or less than 0.9 mg/kg of diet, a maximum concentration equal to or less than 0.8 mg/kg of diet, a maximum concentration equal to or less than 0.6 mg/kg of diet, a maximum concentration equal to or less than 0.4 mg/kg of diet, a maximum concentration equal to or less than 0.35 mg/kg of diet, a maximum concentration equal to or less than 0.3 mg/kg of diet, a maximum concentration equal to or less than 0.25 mg/kg of diet, or a maximum concentration of equal to or less than 0.2 mg/kg diet on a dry matter basis. Minimum amount of iodine or selenium can be an amount to maintain health in the feline.

Intake in an animal of a nutrient from a food, feedstuff, beverage, or supplement can be expressed as the product of the concentration of said nutrient element in said food, feedstuff, beverage, or supplement and the amount of said food, feedstuff, beverage, or supplement ingested by said animal.

Nutrients can be provided to a feline in the form of cat food. A variety of commonly known cat food products are available to cat owners. Commercial cat foods are of three basic types: canned (wet) cat foods, semi-moist cat foods, and dry-type cat foods. Cat treats also are available. Canned cat foods generally have a moisture content above 65%, usually 68% to 85%. Semi-moist cat foods typically has a moisture content between 10-65%, usually 25% to 40%, and may include humectants, potassium sorbate, and other ingredients to stabilize the product and to prevent microbial growth (bacteria and mold). Dry-type cat foods generally have a moisture content of about 10% or less and their processing typically includes extruding, drying and/or baking in heat. Cat treats can typically be semi-moist, chewable treats; dry treats in any number of forms; chewable bones or baked, extruded or stamped treats; confection treats; or other kinds of treats as are known to those skilled in the art.

Nutrients also may be provided to a feline in a form other than prepared cat food. Thus, for example, Kyle et al. added a vitamin-mineral mixture to a canned cat food (Kyle et al., New Zealand Veterinary Journal 42:101-103, 1994). Drinking water or other fluid similarly may be used to provide nutrients to a feline.

Commercial canned cat food products contain varying amounts of iodine and selenium expressed on a dry matter (DM) basis as shown in Tables 1 and 2.

**TABLE 1. CANNED CAT FOOD.**

| **LABEL DESCRIPTION (n=28)** | **SELENIUM (mg/kg DM)** | **IODINE (mg/kg DM)** |
|---|---|---|
| SHEBA Gourmet salmon dinner | 0.812 | 1.55 |
| WHISKAS Ground Mealtime | 0.837 | 1.96 |
| WHISKAS Homestyle Chicken & Salmon | 0.863 | 1.18 |
| WHISKAS Ocean Whitefish & Tuna | 1.01 | 2.98 |
| NUTRO Max Cat Chicken & Lamb | 1.28 | 47.87 |
| NUTRO Kitten Chicken & Ocean Fish | 1.34 | 3.24 |
| NUTRO Cat Chicken & Liver Formula | 1.16 | 30.91 |
| FRISKIES Prime Entrée | 1.36 | 4.57 |
| FRISKIES Senior Ocean Whitefish & Rice | 1.78 | 10.59 |
| FANCY FEAST Sliced Beef Feast | 1.50 | 1.30 |
| FANCY FEAST Sardines, Shrimp & Crab | 4.23 | 1.35 |
| FANCY FEAST Ocean Whitefish & Tuna | 2.45 | 5.45 |
| FANCY FEAST Tender Liver & Chicken | 1.84 | 3.08 |

| **LABEL DESCRIPTION (n = 28)** | **SELENIUM (mg/kg DM)** | **IODINE (mg/kg DM)** |
|---|---|---|
| FANCY FEAST Seafood | 2.09 | 3.27 |
| FANCY FEAST Fish & Shrimp | 3.17 | 1.33 |
| FANCY FEAST Trout | 1.29 | 1.09 |
| FANCY FEAST Tuna & Mackerel | 2.24 | 2.02 |
| HEINZ 9 LIVES Super Supper | 2.38 | 2.47 |
| HEINZ 9 LIVES Ocean Whitefish & Tuna | 1.90 | 5.06 |
| HEINZ 9 LIVES Poached Salmon | 1.60 | 52.27 |
| IAMS Adult Beef Formula | 1.95 | 4.5 |
| IAMS Adult Chicken Formula | 1.32 | 3.18 |
| IAMS Adult Ocean Fish Formula | 2.56 | 5.14 |
| IAMS Adult Salmon Formula | 1.70 | 4.88 |
| BEST CHOICE Ocean Whitefish & Tuna | 1.63 | 2.11 |
| BEST CHOICE Salmon Dinner | 1.66 | 4.38 |
| BEST CHOICE Fisherman's Catch | 2.27 | 4.48 |
| KOZY KITTEN Fish Dinner | 1.32 | 7.07 |
| AVERAGE | 1.77 | 7.83 |

**TABLE 2. DRY CAT FOOD.**

| **LABEL DESCRIPTION (n =14)** | **SELENIUM (mg/kg DM)** | **IODINE (mg/kg DM)** |
|---|---|---|
| WHISKAS Original | 0.551 | 1.34 |
| IAMS Kitten Formula | 0.599 | 2.96 |
| IAMS Weight Control Formula | 0.544 | 3.16 |
| IAMS Original Cat Formula | 0.602 | 2.80 |
| EUKANUBA Adult Chicken & Rice | 0.797 | 2.12 |
| PURINA Kitten Chow | 0.973 | 3.05 |
| PURINA Meow Mix Chicken-Turkey-Salmon | 0.636 | 2.39 |
| PURINA Cat Chow Original | 0.729 | 5.94 |
| PURINA O.N.E. Regular | 0.813 | 2.45 |
| NUTRO Max Cat Lite | 0.479 | 3.38 |
| NUTRO Max Cat Chicken-Rice-Lamb | 0.430 | 3.32 |
| FRISKIES Ocean Fish | 0.717 | 1.97 |
| FRISKIES Chef's Blend | 0.720 | 2.17 |
| HEINZ 9 LIVES Tuna & Eggs | 1.01 | 1.79 |
| AVERAGE | 0.69 | 2.77 |

Commercial cat foods generally include ingredients from the following classes: protein from animal and/or plant sources; individual amino acids; fats; carbohydrate sources, vitamins; minerals; and additional functional ingredients such as preservatives, emulsifiers, and the like.

Protein sources for use in cat foods can comprise from 45% to 100% crude protein on a dry matter basis. Twenty-one protein ingredients commonly used in commercial production of cat foods were analyzed for their contents of selenium and iodine. The results were expressed as mg/kg dry matter (DM) and also as mg/kg crude protein (CP), as shown in Table 3 below.

**TABLE 3.**

| **Protein Ingredient** | **Crude Protein (%DM)** | **Selenium** | | **Iodine** | |
|---|---|---|---|---|---|
| | | **mg/kg DM** | **mg/kg CP** | **mg/kg DM mg/kg CP** | |
| potato concentrate | 75 | 0.08 | 0.11 | 0.084 | 0.11 |
| soy concentrate | 72 | 0.15 | 0.21 | 0.098 | 0.14 |
| soy protein isolate | 91.5 | 0.27 | 0.30 | 0.144 | 0.16 |
| soybean meal | 48.5 | 0.45 | 0.93 | 0.01 | 0.02 |
| corn gluten meal | 64 | 1.25 | 1.95 | 0.02 | 0.03 |
| chicken backs | 75 | 0.41 | 0.55 | 0.02 | 0.03 |
| rice protein isolate | 60 | 0.75 | 1.25 | 0.041 | 0.07 |
| pea protein concentrate | 50 | 1.79 | 3.58 | 0.049 | 0.10 |
| wheat protein conc. | 75 | 1.84 | 2.45 | 0.091 | 0.12 |
| wheat protein isolate | 90 | 2.13 | 2.37 | 0.141 | 0.16 |
| pork liver | 72 | 3.11 | 4.32 | 0.15 | 0.21 |
| beef spleen | 66 | 1.22 | 1.85 | 0.24 | 0.36 |
| beef tongue | 63 | 0.77 | 1.22 | 0.28 | 0.44 |
| pork lung lobes | 75 | 1.71 | 2.28 | 0.29 | 0.39 |
| beef lung | 56 | 0.93 | 1.66 | 0.38 | 0.68 |
| meat protein isolate | 98 | 0.77 | 0.79 | 0.575 | 0.59 |
| deboned turkey | 44.5 | 0.31 | 0.70 | 0.69 | 1.55 |

| **Protein Ingredient** | **Crude Protein (% DM)** | **Selenium** | | **Iodine** | |
|---|---|---|---|---|---|
| | | **mg/kg** | **mg/kg DM** | **mg/kg CP** | **mg/kg CP** |
| Mackerel | 67 | 4.15 | 6.19 | 1.03 | 1.54 |
| Oceanfish | 58 | 1.76 | 3.03 | 1.44 | 2.48 |
| poultry by-product meal | 67 | 0.97 | 1.45 | 2.05 | 3.06 |
| Eggs | 50 | 1.28 | 2.56 | 3.1 | 6.20 |

As shown in the table vegetable proteins such as potato concentrate and soy isolate tend to have lower concentrations of both selenium and iodine.

Protein content in the cat food compositions of the present invention can be in an amount of from 10%, from 15%, from 20%, from 25%, from 30%, from 35% up to 40%, up to 45%, up to 50%, up to 55%, up to 60%, up to 70% or greater on a dry matter basis.

Selenium can be present in the protein component at a concentration equal to or less than 1.0 mg/kg crude protein, a concentration equal to or less than about 0.8 mg/kg crude protein, a concentration equal to or less than 0.6 mg/kg crude protein, a concentration equal to or less than 0.5 mg/kg protein, a concentration equal to or less than 0.4 mg/kg crude protein, a concentration equal to or less than about 0.3 mg/kg crude protein or a concentration equal to or less than about 0.2 mg/kg crude protein.

Iodine can also be present in the protein component at a concentration equal to or less than 1.0 mg/kg crude protein, a concentration equal to or less than 0.8 mg/kg crude protein, a concentration equal to or less than 0.6 mg/kg crude protein, a concentration equal to or less than 0.4 mg/kg crude protein, a concentration equal to or less than 0.2 mg/kg crude protein, a concentration equal to or less than 0.1 mg/kg crude protein, a concentration equal to or less than 0.05 mg/kg crude protein or a concentration equal to or less than 0.02 mg/kg crude protein.

The protein can be present from animal sources such as meat or meat byproducts or from plant sources such as from vegetable protein sources. Animal protein sources can include meat protein isolate, pork lungs, chicken, pork liver, poultry meal, egg and combinations thereof. Vegetable protein sources can include potato concentrate, soy concentrate, soy protein isolate, soybean meal, corn gluten meal and combinations thereof.

Carbohydrate can be supplied from grain ingredients. Such grain ingredients can comprise vegetable materials, typically farinaceous materials, which can supply primarily, dietary digestible carbohydrate and indigestible carbohydrate (fiber) and less than 15% protein on a dry matter basis. Examples include without limitation brewers rice, yellow corn, corn flour, soybean mill run, rice bran, cellulose, gums, and the like. Typically, carbohydrate can be present in the compositions of the present invention in amounts of from 5%, from 10%, from 15%, from 20%, from 25%, from 30%, up to 35%, up to 40%, up to 45%, up to 50%, up to 55% or greater, on a dry matter basis.

Fats used in cat food include without limitation animal fats and oils, such as choice white grease, chicken fat, and the like; vegetable fats and oils; and fish oils. Fats can be present in the cat food compositions of the present invention in concentrations of from 5%, from 10%, from 15%, up to 20%, up to 25% or up to 30% on a dry matter basis.

The percentage of ingredients for use in a cat food composition to achieve particular percentages of protein, carbohydrate and fat can be determined by methods well known in the art. For example, one can employ known computer programs using linear programming techniques to design pet food diets with specific characteristics. An example of such a program is the VLCFX ("Visual Least Cost Formulation - eXtended") Product Formulation and Management System provided by Agri-Data Systems, Inc., Phoenix, AZ.

Individual amino acids can also be included as ingredients in cat food when required to supplement the protein ingredients. Such amino acids that can be added to cat food are known in the art.

Vitamins and minerals may can also be included into the cat food compositions of the present invention. Sources of vitamins can include complex natural sources such as brewers yeast, engivita yeast, and the like, and synthetic and purified sources such as choline chloride and the like. Minerals in the cat food compositions of the present invention can include dicalcium phosphate, calcium carbonate, calcium sulfate, potassium chloride, potassium citrate, iodized and non-iodized salt as required to achieve a desired iodine content, and other conventional forms of the mineral nutrients known in the art (see, for example, National Research Council, Nutrient Requirement of Cats, Washington, DC, National Academy of Sciences, page 27, Table 5 footnotes, 1978).

The following examples are further illustrative of the present invention, but it is understood that the invention is not limited thereto.

### EXAMPLE 1

This example illustrates the effect of a diet providing a restricted intake of both selenium and iodine on thyroid function in older cats having hyperthyroid disease.

A low selenium, low iodine dry cat food, designated diet 30643, was prepared with the following composition and characteristics: grain ingredients, 50-55%; animal protein, 0-5%; vegetable protein, 30-35%; animal fat, 8-10%; other ingredients, 5-7%; selenium, 0.2 mg/kg on a dry matter basis; and iodine, 0.2 mg/kg on a dry matter basis.

Ten geriatric cats with hyperthyroid disease were allotted into two groups based on age and serum total T4 level. The cats were fed a control dry cat food or diet 30643, with contents of iodine and selenium as shown in Table 4 below.

**TABLE 4.**

| **Dry Diet description** | **Se (mg/kg DM)** | **I (mg/kg DM)** |
|---|---|---|
| Control | 0.6 | 2.5 |
| diet 30643 | 0.2 | 0.2 |

The diets were fed for eight weeks. Food intake was measured daily and body weight was measured weekly. Blood was drawn aseptically every two weeks after overnight removal of food. Blood for complete blood counts and serum for thyroid hormone analyses were analyzed immediately. Blood for other measurements was centrifuged at 5000g and the serum harvested and frozen and stored at -70°C until analyzed for serum chemistries and iodine and selenium concentrations.

Serum total T3 and T4 concentrations were measured by radioimmunoassay for use in cats. Serum free T4 concentrations was determined by use of equilibrium dialysis to separate the bound forms from the free forms; radioimmunoassay was used to measure the concentrations of the free forms in the dialysate.

The assay for estimating free T3 in feline serum used an ¹²⁵I-triiodothyronine (T3) derivative that does not bind significantly to the natural binding proteins in serum. In addition, a high affinity antibody was used which binds both the derivative and T3. These two T3 compounds allow for a classical equilibrium radioimmunoassay to be performed without interference from binding proteins and bound T3. The assay antibody was bound to the wall of 12 x 75 mm polypropylene tubes for simple solid phase separation of bound assay fractions from free fractions. The remainder of the assay was standard radioimmunoassay technology.

Serum and dietary iodine were measured by epithermal instrumental neutron activation analysis using a boron nitride irradiation capsule (Spate et al., J Radioanalytical Nuclear Chem 195: 21-30, 1995).

The results of this feeding trial are shown below in Table 5.

**TABLE 5.**

| **ANALYTE** | **DIET** | **WEEK 0** | **WEEK 8** | **CHANGE** | **STATISTICAL SIGNIFICANCE** | **NORMAL RANGE** |
|---|---|---|---|---|---|---|
| Serum total T4, nmol/L | control | 72.8 | 75.3 | +10 | n.s. | 10-55 |
| | diet 30643 | 74.6 | 47.6 | - 27 | P<0.05 | |
| Serum free T4, pmol/L | control | 24.4 | 22.0 | +1 | n.s. | 10-17 |
| | diet 30643 | 29.6 | 17.6 | -12 | P<0.05 | |
| Serum total T3, nmol/L | control | 1.58 | 1.58 | +0.10 | n.s. | 0.6-1.4 |
| | diet 30643 | 1.64 | 0.90 | -0.74 | P<0.05 | |
| Serum free T3, pmol/L | control | 10.52 | 8.18 | -1.60 | n.s. | 1.5-6.0 |
| | diet 30643 | 9.96 | 5.32 | -4.64 | P<0.05 | |
| Serum iodine, mg/L | control | 0.178 | 0.201 | +0.016 | n.s. | -- |
| | diet 30643 | 0.148 | 0.045 | -0.103 | P< 0.05 | -- |
| Urine iodine, µg/mg creatinine | control | 1.12 | 0.485 | -0.67 | P<0.05 | -- |
| | diet 30643 | 1.09 | 0.034 | -1.06 | P<0.05 | -- |
| Serum selenium, mg/L | control | 0.53 | 0.51 | 0 | n.s. | -- |
| | diet 30643 | 0.50 | 0.38 | -0.12 | P<0.05 | -- |
| Serum GPX, U/mL | Control | 5.01 | 6.11 | 1.31 | P<0.05 | -- |
| | diet 30643 | 4.52 | 4.90 | 0.37 | n.s. | -- |

As shown in the table, cats fed diet 30643 showed significant reductions in serum total T3 and T4, to normal levels, whereas the concentrations of these thyroid hormones in cats fed the control diet were unchanged. Free T3 and T4 showed similar statistically significant reductions in the cats fed the diet 30643. Serum selenium and iodine levels decreased in the cats fed the low selenium diet 30643 but were unchanged in the cats fed the control diet. Serum glutathione peroxidase (GPX), an index of selenium nutritional status, was unchanged in the cats fed diet 30643 but increased in the cats fed the control diet. GPX, a selenium-containing enzyme, has important antioxidant functions, so decreased activity of GPX would be undesirable.

### EXAMPLE 2

This example illustrates the effect of selenium intake on circulating thyroid hormone levels in kittens.

Thirty-six specific-pathogen-free domestic short-hair kittens (19 males and 17 females; 9.8 weeks old) were utilized in a randomized complete block design with gender and weight used as blocking criteria. The kittens were fed a low selenium (0.02 mg/kg Se, dry matter basis) torula yeast-based diet for 5 weeks (pre-test) after which an amino acid-based diet (0.027 mg Se/kg diet) was fed for 8 weeks (experimental period). Six levels of selenium (0, 0.05, 0.075, 0.10, 0.20 and 0.30 mg/kg diet) were added to the amino acid-based diet in the form of sodium selenite. Further experimental details were as described earlier (Wedekind et al., J Anim Physiol Anim Nutr (Berl) 875-230, 2003 which is hereby incorporated in whole by reference).

Food intake was measured daily and body weight weekly. Response variables included selenium concentrations and GPX activity in plasma and red blood cells (RBC) as well as plasma total T3 and total T4. No significant changes in food intake, weight gain or clinical signs of selenium deficiency were noted.

The kitten's selenium requirement was estimated from breakpoints in the curves regressing RBC and plasma GPX on selenium intake. Breakpoints were determined to be 0.12 and 0.15 mg/kg, dry matter basis, respectively. No definitive breakpoint was observed for the curve regressing plasma selenium concentrations on selenium content of the diet. Plasma selenium levels continued to increase as selenium intake increased, even above the estimated requirement.

Selenium intake of the kittens affected their thyroid hormone levels. Plasma total T4 and the ratio of total T4: total T3 decreased in a quadratic fashion as the dietary selenium concentration increased. However, plasma total T3 increased linearly as shown in Table 6.

**TABLE 6.**

| **DIETARY SELENIUM mg/kg** | **PLASMA SELENIUM¹ µmol/L** | **PLASMA TOTAL T4¹ nmol/L** | **PLASMA TOTAL T3¹ nmol/L** | **RATIO, T4:T3** |
|---|---|---|---|---|
| 0.027 | 0.22^{a} | 41.9^{c} | 0.73^{a} | 57.4 |
| 0.073 | 0.99^{b} | 29.3^{ab} | 0.86^{a} | 34.1 |
| 0.100 | 1.56^{c} | 32.6^{b} | 0.92^{a} | 35.4 |
| 0.122 | 2.06^{d} | 30.7^{ab} | 0.91^{a} | 33.7 |
| 0.210 | 4.12^{e} | 24.0^{a} | 0.91^{ab} | 26.4 |
| 0.314 | 4.61^{f} | 28.4^{ab} | 1.27^{b} | 22.4 |

| | | | | |
|---|---|---|---|---|
| Mean values not bearing the same superscript letter differ significantly (P < 0.05) | | | | |

The regression of total T3 (Y) on supplemental selenium concentration from sodium selenite (X) was Y = 0.79 (±0.08) + 1.42 (±0.51)X, R² = 0.19. The regression of total T3 on plasma selenium was Y = 0.79 (±0.09) + 0.081 (±0.03)X, R² = 0.17, p < 0.05.

The observations that the plasma selenium concentration and that plasma T3 levels continued to increase at selenium intake levels above the requirement indicate that controlling the selenium intake of the growing cat is important for maintaining normal thyroid function.

### EXAMPLE 3

This example illustrates the effect of increasing dietary selenium on indicators of thyroid function in normal healthy adult cats.

A low selenium diet was prepared with the following ingredients: water, dried torula yeast, chicken fat, cornstarch, cellulose, and a selenium-free mixture of minerals, vitamins and L-cystine, DL-methionine, L-tryptophan, and choline chloride. The mineral mixture contained calcium carbonate, sodium chloride, ferrous sulfate heptahydrate, zinc sulfate monohydrate, manganese sulfate monohydrate, copper sulfate pentahydrate, boric acid, sodium molybdate dihydrate, potassium iodide, and cobalt sulfate heptahydrate. The vitamin mixture contained Vitamin A (as retinyl acetate), vitamin E (as dl-alpha-tocopheryl acetate), niacin, thiamin, D-pantothenic acid, pyridoxine hydrochloride, riboflavin, folic acid, biotin, and cyanocobalamin. The diet contained by analysis 8.8% crude protein (as is basis) and 0.04 mg of selenium per kg of diet on a dry matter basis.

Sixty normal healthy adult cats were fed this low selenium diet (0.03 mg/kg dry matter basis) for 3 weeks. After this depletion period, the cats were allotted to groups of ten cats each and fed the same diet supplemented with 6 levels of selenomethionine (0, 0.1, 1, 2.5, 5 and 10 mg/kg, dry matter basis, as elemental selenium) for 6 months. Thirty-three cats completed the study.

Response variables measured included selenium concentration and GPX activity in serum and red blood cells, complete thyroid hormone profile, complete blood count (CBC), serum chemistry profile (SCP), hair growth rate and immune function measures. No significant changes in body weight, CBC, SCP or clinical signs were observed after six months of feeding.

A definitive breakpoint in the curve regressing serum GPX on dietary selenium intake indicated a minimum recommendation of 0.13 ppm. Overall results indicate that the minimum requirement for selenium is 0.13 mg/kg dry matter basis in adult cat foods. Hair growth rate was significantly decreased at selenium concentrations below the breakpoint, but was unchanged at high selenium concentrations.

All total thyroid hormone serum concentrations were within normal ranges. Serum selenium concentrations in these cats did not plateau at selenium intakes greater than the cat's requirement for selenium, but continued to increase linearly. The serum thyroid hormone and selenium levels with increasing dietary selenium are shown in Table 7.

**TABLE 7.**

| **DIETARY SELENIUM** | **NUMBER OF CATS** | **TOTAL T4 (nmol/L** | **TOTAL T3 (nmol/L)** | **FREE T3 (pmol/L)** | **SELENIUM (mg/L)** |
|---|---|---|---|---|---|
| 0.03mg/kg | 4 | 41.5 | 0.475 | 4.22 | 0.056 |
| 0.13mg/kg | 6 | 37.0 | 0.717 | 4.87 | 0.409 |
| 1.0 mg/kg | 7 | 39.6 | 0.714 | 5.37 | 0.562 |
| 2.5 mg/kg | 7 | 38.3 | 0.671 | 5.17 | 0.673 |
| 5.0 mg/kg | 4 | 30.8 | 0.625 | 4.02 | 0.884 |
| 10.0 mg/kg | 5 | 39.2 | 0.720 | 5.82 | 1.099 |
| Normal values | | 10-55 | 0.6-1.4 | 1.5-6.0 | -- |

The dietary selenium intake level was significantly correlated with total T3 levels (Y): Y = 0.977 + 0.12157X, where X is selenium intake (r = 0.36; P = 0.0343). Serum selenium levels also were significantly correlated with total T3 levels (Y): Y = 0.562 + 0.01336X, where X equals selenium intake (r = 0.395; P = 0.0227).

## Claims

1. Use of selenium in the manufacture of a feline diet for reducing risk of developing hyperthyroidism in a feline, wherein the amount of selenium in the feline diet is not more than 1.3 mg/kg on a dry matter basis,.

2. The use according to claim 1, wherein the amount of selenium in the feline diet is not more than 0.8 mg/kg on a dry matter basis.

3. The use according to claim 1 or 2, wherein the amount of iodine in the feeling diet is not more than 2.5 mg/kg on a dry matter basis, preferably not more than 1.0 mg/kg on a dry matter basis.

4. The use according to any one of the preceding claims, wherein the diet comprises protein at a concentration of from 10% to 50% on a dry matter basis, preferably from 20% to 40% on a dry matter basis.

5. The use according to claim 4, wherein the protein comprises selenium at a concentration of not more than 1.0 mg/kg crude protein, preferably not more than 0.5 mg/kg crude protein.

6. The use according to claim 4 or 5, wherein the protein comprises a vegetable protein, preferably a vegetable protein selected from the group consisting of potato concentrate, soy concentrate, soy protein isolate, soybean meal, rice isolate, corn gluten meal and combinations thereof.

7. The use according to claim 4 or 5, wherein the protein comprises an animal protein, preferably an animal protein selected from the group consisting of chicken backs, beef tongue, pork lung, beef lung, mechanically deboned turkey, poultry by-product meal, egg and combinations thereof.

8. The use according to any one of the preceding claims, wherein the diet further comprises fat at a concentration of from 10 to 30% on a dry matter basis and carbohydrate at a concentration of from 5% to 55% on a dry matter basis.

## Patentansprüche

1. Verwendung von Selen bei der Herstellung einer Katzennahrung zur Verminderung des Risikos, dass sich bei der Katze eine Schilddrüsenüberfunktion entwickelt, wobei die Menge an Selen in der Katzenkost nicht mehr als 1,3 mg/kg, bezogen auf Trockensubstanz, beträgt.

2. Verwendung nach Anspruch 1, wobei die Menge an Selen in der Katzennahrung nicht mehr als 0,8 mg/kg, bezogen auf Trokkensubstanz, beträgt.

3. Verwendung nach Anspruch 1 oder 2, wobei die Menge an Iod in der Katzennahrung nicht mehr als 2,5 mg/kg, bezogen auf Trockensubstanz beträgt, vorzugsweise nicht mehr als 1,0 mg/kg, bezogen auf Trockensubstanz.

4. Verwendung nach einem der vorhergehenden Ansprüche, wobei die Nahrung Protein in einer Konzentration von 10 % bis 50 %, bezogen auf Trockensubstanz, umfasst, vorzugsweise von 20 % bis 40 %, bezogen auf Trockensubstanz.

5. Verwendung nach Anspruch 4, wobei das Protein Selen in einer Konzentration von nicht mehr als 1,0 mg/kg rohes Protein umfasst, vorzugsweise nicht mehr als 0,5 mg/kg rohes Protein.

6. Verwendung nach Anspruch 4 oder Anspruch 5, wobei das Protein ein pflanzliches Protein umfasst, vorzugsweise ein pflanzliches Protein ausgewählt aus der Gruppe bestehend aus Kartoffelkonzentrat, Sojakonzentrat, Sojaproteinisolat, Reisisolat, Maisglutenmehl und Kombinationen davon.

7. Verwendung nach Anspruch 4 oder 5, wobei das Protein ein tierisches Protein umfasst, vorzugsweise ein tierisches Protein ausgewählt aus der Gruppe bestehend aus Hühnerrükken, Rinderzunge, Schweinelunge, Rinderlunge, mechanisch entbeintem Truthahn, Geflügelnebenproduktmehl, Eiern und Kombinationen davon.

8. Verwendung nach einem der vorhergehenden Ansprüche, wobei die Kost ferner Fett in einer Konzentration von 10 bis 30 %, bezogen auf Trockensubstanz, und Kohlenhydrate in einer Konzentration von 5 bis 55 %, bezogen auf Trockensubstanz, umfasst.

## Revendications

1. Utilisation de sélénium dans la préparation d'un régime alimentaire pour félins pour réduire le risque de développement d'hyperthyroïdisme chez un félin, dans laquelle la quantité de sélénium dans le régime alimentaire pour félins n'est pas supérieure à 1,3 mg/kg sur une base de matière sèche.

2. Utilisation selon la revendication 1, dans laquelle la quantité de sélénium dans le régime alimentaire pour félins n'est pas supérieure à 0,8 mg/kg sur une base de matière sèche.

3. Utilisation selon la revendication 1 ou 2, dans laquelle la quantité d'iode dans le régime alimentaire pour félins n'est pas supérieure à 2,5 mg/kg sur une base de matière sèche, de préférence pas supérieure à 1,0 mg/kg sur une base de matière sèche.

4. Utilisation selon l'une quelconque des revendications précédentes, dans laquelle le régime alimentaire comprend des protéines à une concentration de 10 % à 50 % sur une base de matière sèche, de préférence de 20 % à 40 % sur une base de matière sèche.

5. Utilisation selon la revendication 4, dans laquelle la protéine comprend du sélénium à une concentration qui n'est pas supérieure à 1,0 mg/kg de protéine brute, de préférence pas supérieure à 0,5 mg/kg de protéine brute.

6. Utilisation selon la revendication 4 ou 5, dans laquelle la protéine comprend une protéine végétale, de préférence une protéine végétale choisie dans le groupe consistant en concentré de pomme de terre, concentré de soja, isolat de protéines de soja, farine de soja, isolat de riz, farine de gluten de maïs et leurs combinaisons.

7. Utilisation selon la revendication 4 ou 5, dans laquelle la protéine comprend une protéine animale, de préférence une protéine animale choisie dans le groupe consistant en dos de poulet, langue de boeuf, poumon de porc, poumon de boeuf, dinde désossée mécaniquement, farine de sous-produits de volailles, oeuf et leurs combinaisons.

8. Utilisation selon l'une quelconque des revendications précédentes, dans laquelle le régime alimentaire comprend en outre des matières grasses à une concentration de 10 à 30 % sur une base de matière sèche et des glucides à une concentration de 5 % à 55 % sur une base de matière sèche.
